**Europäisches Patentamt**

**European Patent Office**

**Office européen des brevets**

(11) Numéro de publication: **0 007 252**
**A1**

## (12) DEMANDE DE BREVET EUROPEEN

(21) Numéro de dépôt: 79400250.1

(22) Date de dépôt: 18.04.79

(51) Int. Cl.³: **B 05 B 9/00**
**B 05 B 7/32, G 05 D 7/03**
**F 04 B 13/02**

(30) Priorité: 28.04.78 FR 7812704
16.03.79 FR 7906694

(43) Date de publication de la demande:
23.01.80 Bulletin 80/2

(84) Etats Contractants Désignés:
BE CH DE GB IT LU NL SE

(71) Demandeur: S K M, Société Anonyme
150 Avenue de Stalingrad
F-93240 Stains(FR)

(72) Inventeur: Binoche, Michel
S K M 150, Avenue de Stalingrad
F-93240 Stains(FR)

(74) Mandataire: Roger-Petit, Jean-Camille et al,
OFFICE BLETRY 2, Boulevard de Strasbourg
F-75010 Paris(FR)

(54) Dispositif d'alimentation à débit constant de fluide, notamment pour pistolet de pulvérisation.

(57) Dispositif permettant d'alimenter à débit constant un appareil utilisateur, avec au moins un fluide ayant une viscosité variable, comprenant une source de fluide délivrant ledit fluide à viscosité variable et un circuit de fluide reliant ladite source de fluide à l'appareil utilisateur. Il comprend en outre deux pompes volumétriques (2 et 3) jumelées mécaniquement pour que leurs débits soient dans un rapport fixe, une première (2) des deux pompes étant intercalée dans le circuit (5, 7) du fluide à viscosité variable, tandis que la seconde pompe (3) est intercalée dans un second circuit de fluide (9), dans lequel circule un fluide à viscosité constante et qui comporte, en aval de la seconde pompe, des moyens (10,13) de réglage du débit du fluide à viscosité constante.

L'invention est notamment applicable à une installation de pulvérisation de peinture.

Fig. 1

EP 0 007 252 A1

## Dispositif d'alimentation à débit constant de fluide, notamment pour pistolet de pulvérisation.

La présente invention concerne un dispositif permettant d'alimenter à débit constant un appareil utilisateur, par exemple un pistolet de pulvérisation, avec au moins un fluide ayant une viscosité variable, par exemple de la peinture, comprenant une source de fluide délivrant ledit fluide à viscosité variable, et un circuit de fluide reliant ladite source de fluide à l'appareil utilisateur.

Un pistolet de pulvérisation de peinture est généralement alimenté en peinture par une alimentation de peinture sous pression. La peinture sort du pistolet par une buse, qui peut être obturée par un pointeau. Ce dernier permet d'arrêter le débit de peinture ou de l'autoriser. D'autre part, une ouverture partielle du pointeau permet de régler le débit en étranglant plus ou moins le passage dans la buse.

Ce système classique est simple, mais il ne permet pas d'obtenir un débit constant de peinture. Pour obtenir cette constance, il faudrait, en premier lieu, régler de façon précise la pression d'alimentation de la peinture, ce qui pourrait éventuellement être effectué avec un détendeur de pression. Mais cela ne suffirait pas, car le débit de la peinture à travers l'orifice de la buse dépend de la viscosité de la peinture. Or la viscosité de la peinture est variable avec la qualité de cette dernière, sa dilution et surtout sa température. Il est facile de comprendre qu'il est difficile d'être

absolument maître de la température.

Suivant la qualité et la dilution de la peinture, on pourrait régler la pression et l'ouverture du pointeau à la valeur désirée, en fonction du débit, mais, pour de nombreuses utilisations, on change fréquemment de peinture dans la journée pour changer de teinte par exemple. Il faudrait donc, à chaque changement, régler la pression ou l'ouverture du pointeau.

D'autre part, il est difficile de mesurer un débit de peinture, car les systèmes simples de mesure de débit donnent des lectures variables avec la viscosité.

Enfin, les peintures sont abrasives et l'usure des orifices des buses ou des extrémités des pointeaux entraîne des variations de débit.

Il est donc intéressant d'assurer l'alimentation d'un pistolet de pulvérisation de peinture non pas à pression constante, mais à débit constant. Il est bien certain, dans ce cas, que la pression de peinture pourra varier avec tous les éléments notés ci-dessus, mais la constance de la pression de peinture n'est pas nécessaire pour assurer un bon fonctionnement du pistolet.

La présente invention a donc pour but de fournir un dispositif permettant d'alimenter un appareil utilisateur, par exemple un pistolet de pulvérisation, avec au moins un fluide ayant une viscosité variable, par exemple de la peinture, et qui permet d'obtenir un débit réglable et constant du fluide à viscosité variable quelle que soit sa viscosité.

A cet effet, le dispositif d'alimentation selon la présente invention est caractérisé en ce qu'il comprend en outre deux pompes volumétriques jumelées mécaniquement pour que leurs débits soient dans un rapport fixe, une première des deux pompes étant intercalée dans le circuit du fluide à viscosité variable, tandis que la seconde pompe est intercalée dans un second circuit de fluide, dans lequel circule un fluide à viscosité constante et qui comporte, en aval de la seconde pompe, des moyens de réglage du débit du fluide à viscosité constante.

Le fluide à viscosité variable pourra être par exemple de la peinture, tandis que l'autre fluide, à viscosité constante, pourra être par exemple de l'eau. Si le débit de l'eau est bien réglé, le débit de la peinture sera également bien réglé du fait que les débits des deux pompes volumétriques jumelées resteront toujours dans un rapport fixe. Autrement dit, le réglage et la mesure du débit sont effectués sur un fluide auxiliaire ayant des caractéristiques stables indépendantes de celles de la peinture. On supposera dans la suite du présent texte que ce fluide auxiliaire est de l'eau.

La pression du fluide auxiliaire à viscosité constante, l'eau en l'occurrence, ne restera pas constante quand les deux pompes fonctionneront. Par conséquent, pour maintenir le débit d'eau à une valeur réglée et constante et, par suite, pour maintenir également le débit de peinture à une valeur réglée et constante, lesdits moyens de réglage du débit du fluide à viscosité constante peuvent comprendre, d'une part, un détendeur de pression réglable relié au côté refoulement de la seconde pompe pour régler la pression de l'eau et, d'autre part, un ajutage calibré de diamètre réglable en série avec le détendeur de pression. Le débit d'eau et, par conséquent, celui de la peinture sera déterminé par le diamètre de l'ajutage calibré. Pour une valeur donnée du diamètre de l'ajutage calibré, un ajustement de débit pourra être en outre obtenu en réglant la pression de réglage du détendeur de pression.

On donnera maintenant une description détaillée de diverses formes d'exécution de la présente invention en faisant référence aux dessins annexés sur lesquels :

La figure 1 représente schématiquement une première forme d'exécution d'un dispositif d'alimentation à débit constant selon la présente invention, permettant d'alimenter un pistolet de pulvérisation avec une seule peinture.

La figure 2 montre schématiquement un dispositif d'alimentation analogue à celui représenté sur la figure 1, mais permettant d'alimenter le pistolet de pulvérisation alternativement avec deux peintures différentes.

La figure 3 montre schématiquement une deuxième forme d'exécution du dispositif d'alimentation à débit constant selon la présente invention.

Les figures 4a et 4b, assemblées suivant la ligne I-I, représentent un dispositif d'alimentation à débit constant selon l'invention, permettant d'alimenter un pistolet de pulvérisation avec un mélange de trois produits dans des proportions constantes, mais réglables, et avec un débit global constant, mais réglable tout en conservant les proportions des trois produits.

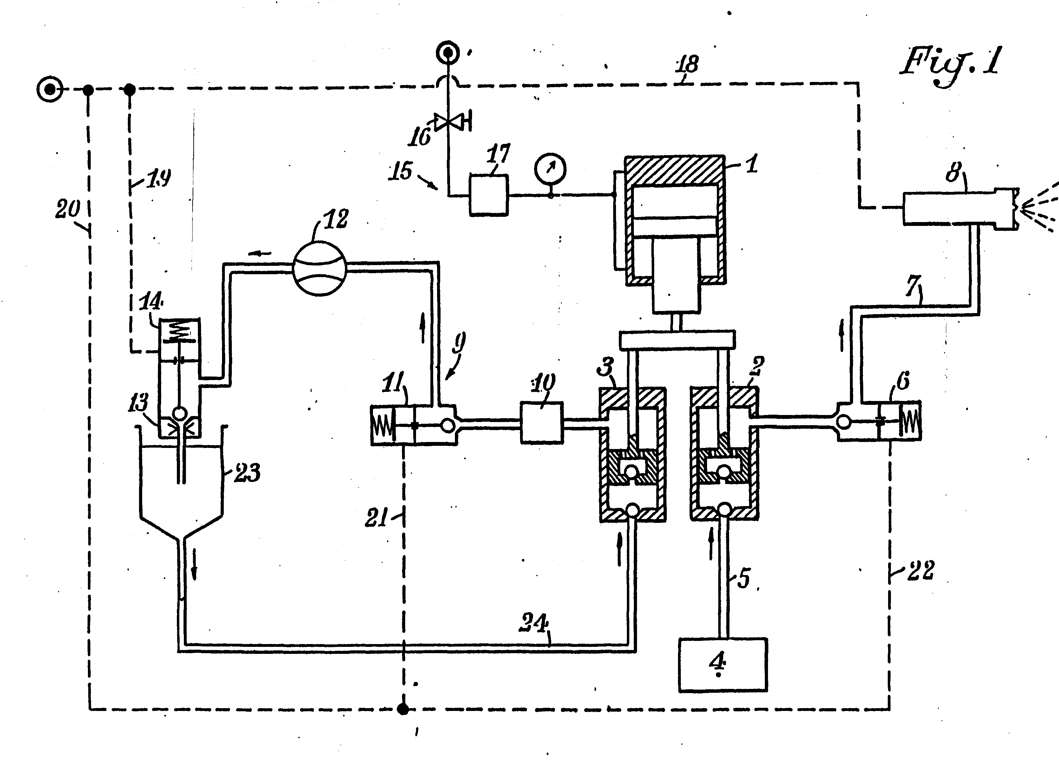

Sur la figure 1, un moteur 1 à mouvement alternatif, par exemple un moteur pneumatique, entraîne en synchronisme les pistons de deux pompes volumétriques jumelées 2 et 3. Le moteur pneumatique 1 et les pompes 2 et 3 représentées sur la figure 1 sont du type différentiel pour permettre de simplifier le schéma et également le montage, mais il est à noter que le moteur 1 et/ou les pompes 2 et 3 peuvent être à double effet, non différentiels.

Une source de peinture 4 délivre à la pompe 2, par une conduite 5, de la peinture à une pression déterminée, qui peut être la pression atmosphérique ou une pression plus élevée.

Le circuit alimenté par la pompe 2 est donc le circuit de peinture. Ce circuit comprend, à la sortie de la pompe 2, une valve commandée 6. Etant donné que dans les installations classiques de pulvérisation de peinture on dispose généralement d'une source d'air comprimé, la valve commandée 6 est de préférence constituée par une valve à commande pneumatique. La sortie de la valve à commande pneumatique 6 est reliée directement par une conduite 7 à l'arrivée de peinture d'un pistolet de pulvérisation classique 8.

Le circuit 9 alimenté par la pompe 3 est un circuit d'eau. Il comprend, en série, un détendeur de pression réglable 10, une valve commandée 11, de préférence à commande pneumatique, un débitmètre 12 et un ajutage calibré 13 de diamètre réglable, incorporé à une valve commandée 14, de préférence à commande pneumatique.

Deux circuits d'air comprimé sont prévus. Le premier circuit d'air comprimé 15 alimente en air comprimé le moteur pneumatique 1 à travers un robinet 16 et un détendeur de pression 17. Le second circuit d'air comprimé pilote, d'une part, le fonctionnement du pistolet de pulvérisation 8 par une conduite d'air comprimé 18 et, d'autre part, le fonctionnement des valves à commande pneumatique 6, 11 et 14 par des conduites d'air comprimé 19, 20, 21 et 22. Comme cela est montré sur la figure 1, les valves à commande pneumatique 6, 11 et 14 sont de préférence des valves à ouverture commandée par la pression, c'est-à-dire qu'elles s'ouvrent lorsque de l'air comprimé leur est appliqué et qu'elles se ferment sous l'action d'un ressort lorsque l'air comprimé cesse de leur être appliqué. Toutefois, les valves à commande pneumatique 6, 11 et 14 peuvent aussi être du type à fermeture par la pression. Dans ce cas, un distributeur approprié doit être intercalé dans le circuit d'air comprimé de pilotage pour mettre les valves 6, 11 et 14 à vide lorsque l'air comprimé est appliqué au pistolet 8, et pour appliquer l'air comprimé à ces valves lorsque l'air comprimé cesse d'être appliqué au pistolet 8.

En aval de l'ajutage calibré 13, le circuit d'eau 9 est complété par un réservoir d'eau 23 relié par une conduite 24 au côté aspiration de la pompe 3 afin de boucler le circuit d'eau 9.

Le dispositif d'alimentation en peinture à débit constant qui a été décrit ci-dessus fonctionne de la manière suivante.

Quand on ouvre le robinet 16 d'alimentation en air comprimé du moteur 1, celui-ci exerce une force sur les deux tiges de piston des pompes 2 et 3. Cette force sera égale à la somme des forces opposées par les deux pistons, chacune de ces forces étant égale au produit de la pression du fluide (peinture ou eau) par la section utile du piston. Si les valves 6 et 11 sont fermées, la valeur des pressions de la peinture et de l'eau sont indéterminées. Mais si on ouvre les valves 6, 11 et 14 et si on ouvre le pointeau du pistolet 8 dans le même temps, celui-ci va débiter de la peinture et l'ajutage calibré 13 va débiter de l'eau. Le débit de l'eau sera déterminé si la pression de l'eau refoulée par la pompe 3 est supérieure à la pression de réglage du détendeur 10. Le débit de peinture sera également déterminé et la pression de

0007252

la peinture s'établira à la valeur nécessaire pour que ce débit passe par la buse du pistolet 8. Cette pression de la peinture étant ainsi établie, la pression de l'eau se fixera à une valeur telle que la somme des forces résistantes appliquées aux pistons des deux pompes 2 et 3 soit égale à celle développée par le moteur 1. La force développée par le moteur 1 peut être réglée en réglant la pression d'air comprimé alimentant le moteur 1 au moyen du détendeur 17 prévu à cet effet.

Les valves à commande pneumatique 6, 11 et 14 sont prévues pour que les pressions à l'arrêt se maintiennent aux valeurs atteintes en fonctionnement.

Selon la valeur de la pression de la peinture débitée par la source 4, il peut être nécessaire de prévoir un moyen de réglage tel que la pression de la peinture au refoulement de la pompe 2 soit supérieure à la pression de la peinture débitée par la source 4 pour assurer un fonctionnement correct des clapets de la pompe 2. Un tel réglage peut être par exemple réalisé à l'aide d'un ajutage calibré de diamètre réglable incorporé à la valve 6 de la même manière que l'ajutage 13.

Le dispositif représenté sur la figure 1 prévoit l'utilisation d'un pistolet automatique, car les dispositifs d'alimentation à débit constant sont surtout prévus pour les équipements automatiques. Néanmoins, avec un pistolet manuel de pulvérisation pneumatique ou mixte, c'est-à-dire à la fois pneumatique et hydrostatique, il est possible d'assurer le pilotage des valves à commande pneumatique 6, 11 et 14 au moyen d'une valve connue ouvrant l'alimentation en air comprimé de pilotage quand on a un débit d'air de pulvérisation au pistolet.

Le débitmètre 12 permet d'afficher le débit d'eau, donc le débit de peinture. Cette mesure permet le réglage facile d'un débit qui, avec les anciens montages, était fait par tâtonnement. Pour régler le débit, on peut régler le diamètre de l'ajutage calibré 13 ou la pression d'eau au moyen du détendeur 10.

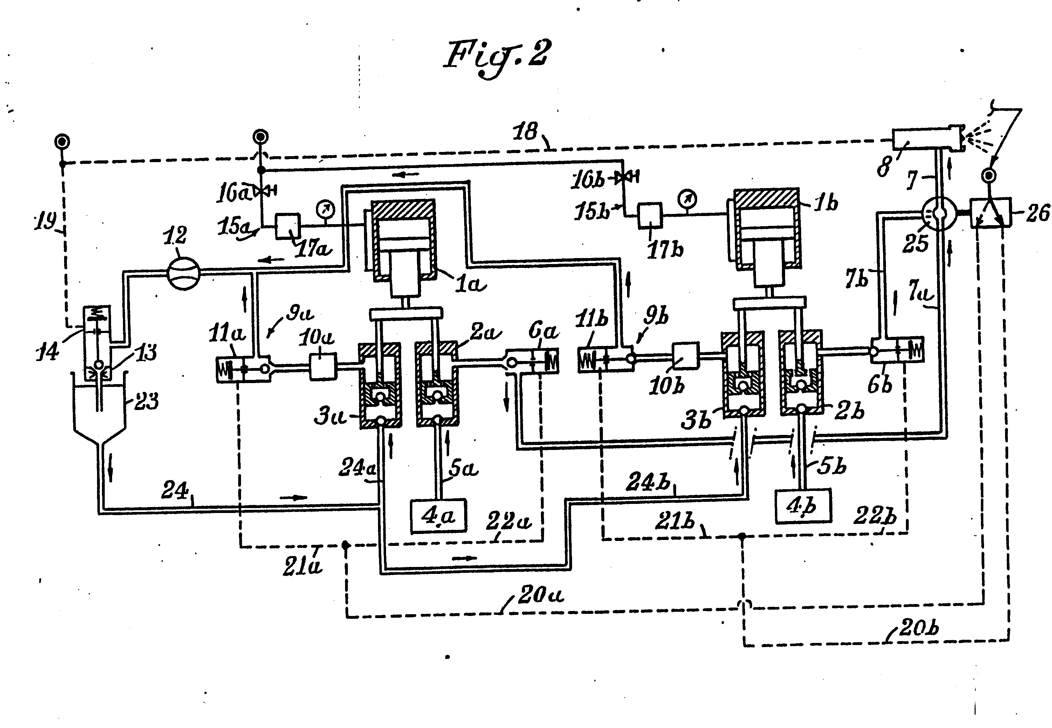

Sur la figure 2, il est représenté un dispositif permettant d'alimenter un pistolet 8 avec deux peintures différentes. Sur la figure 2, les éléments qui sont identiques à ceux montrés sur la figure 1 sont désignés par les mêmes numéros de référence, l'indice a étant affecté aux éléments spécialement destinés à l'alimentation et au réglage du débit de la première peinture, tandis que l'indice b est affecté aux éléments spécialement destinés à l'alimentation et au réglage du débit de la deuxième peinture. Les côtés refoulements des deux pompes 2a et 2b sont reliés respectivement par les conduites de peinture 7a et 7b respectivement aux deux entrées d'un robinet à trois voies 25, dont la sortie est reliée par la conduite 7 à l'arrivée de peinture du pistolet 8 et qui permet de sélectionner l'une ou l'autre peinture débitée par les pompes 2a et 2b.

En réalité, ce robinet à trois voies 25 est une représentation simplifiée de distributeurs connus en eux-mêmes, qui remplissent automatiquement la sélection de la peinture et également, à chaque changement de peinture, de teintes différentes en général, un rinçage au solvant de la conduite 7 de branchement au pistolet 8 et du pistolet lui-même.

Sur le schéma de la figure 2, il est prévu deux circuits de pilotage par air comprimé. Le premier circuit de pilotage 18, 19 commande le fonctionnement du pistolet 8 et l'ouverture de la valve à commande pneumatique 14 du circuit d'eau. Le second circuit de pilotage commande, au moyen d'un distributeur 26 accouplé mécaniquement au robinet à trois voies 25, soit l'ouverture des valves à commande pneumatique 6a et 11a, soit l'ouverture des valves à commande pneumatique 6b et 11b, selon la peinture sélectionnée par le robinet à trois voies 25.

Le côté refoulement d'eau de chaque pompe 3a, 3b est branché en parallèle sur une partie commune du circuit d'eau de retour au réservoir 23, comportant le débitmètre 12 et la valve à commande pneumatique 14 contenant l'orifice calibré 13. De même, le réservoir 23 est raccordé par une conduite commune 24 et par les conduites 24a et 24b respectivement aux côtés admission d'eau des pompes 3a et 3b.

Sur la partie 9a ou 9b du circuit d'eau spéciale à chaque pompe 3a ou 3b, on trouve le détendeur de pression 10a ou 10b et la valve à commande pneumatique 11a ou 11b.

Il est préférable d'avoir un détendeur de pression par pompe 3a ou 3b, car il n'est pas évident que le débit doive être le même pour les deux peintures ou que les caractéristiques de fluidité des deux peintures soient les mêmes. Dans ce cas, il faut donc pouvoir ajuster les pressions d'eau des deux circuits d'eau pour régler les débits d'eau et par suite les débits de peinture aux valeurs désirées.

Si les marges de réglage que l'on a avec les détendeurs 10a et 10b sont insuffisantes, on peut utiliser des ajutages calibrés supplémentaires, non montrés, incorporés par exemple aux valves à commande pneumatique 11a et 11b de chaque pompe 3a et 3b. On aura ainsi, sur chacun des deux circuits d'eau, deux ajutages calibrés en série, l'un spécifique à une pompe 3a ou 3b, l'autre (13) commun aux deux circuits d'eau.

Comme on l'a déjà indiqué plus haut, on peut noter que de tels ajutages calibrés peuvent être incorporés aussi dans les valves à commande pneumatique 6a et 6b sur les circuits de peinture 7a et 7b pour assurer éventuellement une pression de refoulement de peinture supérieure à la pression de la peinture débitée par les sources de peinture 4a et 4b.

Dans les dispositifs d'alimentation en peinture représentés sur les figures 1 et 2, les deux pompes 2 et 3 ou 2a et 3a ou 2b et 3b sont entraînées en synchronisme par un moteur à mouvement alternatif 1. De tels dispositifs d'alimentation seront par exemple utilisés lorsque la source de peinture 4, 4a ou 4b débite la peinture à une pression relativement basse, inférieure à celle qui est nécessaire pour le fonctionnement du pistolet 8.

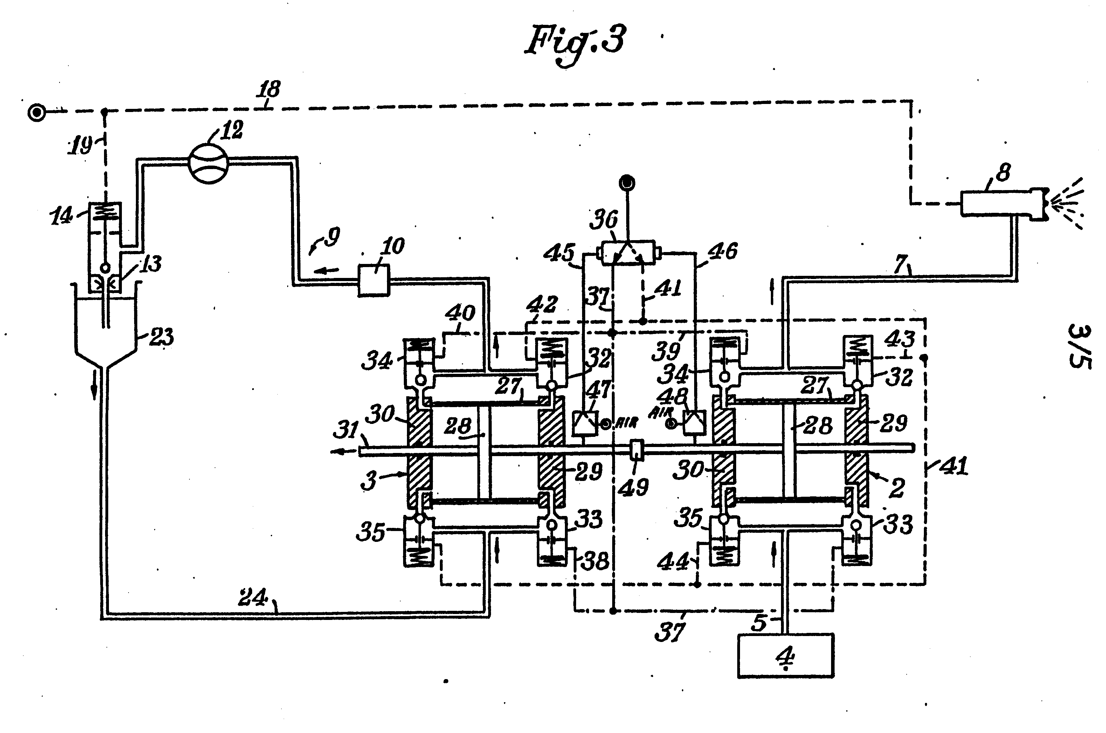

Toutefois, dans certaines installations classiques de pulvérisation de peinture, la peinture est généralement délivrée par la source 4 sous une pression supérieure à celle qui est nécessaire pour le fonctionnement du pistolet 8. On dispose alors d'une source d'énergie suffisante pour faire fonctionner les deux pompes 2 et 3 du dispositif d'alimentation en peinture selon la présente invention, et le moteur à mouvement alternatif 1 peut être supprimé. En effet, si la source de peinture 4 débite de la peinture à haute pression, la pompe à peinture 2 peut alors fonctionner en moteur pour entraîner la pompe à eau 3. La figure 3 représente schématiquement un tel dispositif. Dans la figure 3, les éléments qui sont identiques à ceux représentés sur la figure 1 ou qui ont la même fonction sont désignés par les mêmes numéros de référence.

Comme montré sur la figure 3, les pompes 2 et 3 sont des pompes à piston à double effet. Chaque pompe 2 et 3 est constituée par un cylindre 27 dans lequel se déplace un piston 28. Chaque cylindre 27 est fermé par deux culasses 29 et 30. Les deux pistons 28 sont reliés l'un à l'autre par un axe 31 qui a une section uniforme sur toute sa longueur et qui traverse les culasses 29 et 30 des deux pompes. Des joints appropriés ou des presse-étoupe assurent l'étanchéité du passage de l'axe 31 à travers les culasses 29 et 30. Chaque culasse 29 comporte, à sa partie supérieure, un orifice de refoulement auquel est associée une valve commandée 32, et, à sa partie inférieure, un orifice d'admission auquel est associée une valve commandée 33. De même, chaque culasse 30 comporte, à sa partie supérieure, un orifice de refoulement auquel est associée une valve commandée 34, et, à sa partie inférieure, un orifice d'admission auquel est associée une valve commandée 35. Les valves commandées 32, 33, 34 et 35 sont de préférence des valves à commande pneumatique. Comme montré sur la figure 3, les valves 32, 33, 34 et 35 sont du type à ouverture commandée par la pression, mais, bien entendu, elles pourraient être aussi du type à fermeture commandée par la pression. La commande des valves 32, 33, 34 et 35 est organisée pour que l'orifice d'admission situé à une extrémité de chaque cylindre 27 et l'orifice de refoulement situé à l'autre extrémité de chaque cylindre 27 soient ouverts quand l'orifice d'échappement situé à l'extrémité mentionnée en premier lieu et l'orifice d'admission situé à l'autre extrémité sont fermés, et vice-versa.

Plus précisément, la commande des valves 32, 33, 34 et 35 comprend un distributeur d'air comprimé 36 comportant une entrée reliée à une source d'air comprimé de pilotage, deux sorties et un tiroir mobile pour relier sélectivement l'une ou l'autre desdites sorties avec l'entrée du distributeur 36. L'une des sorties du distributeur 36 est reliée par des conduites 37, 38, 39 et 40 aux deux valves 33 et aux deux valves 34, tandis que l'autre sortie du distributeur 36 est reliée par des conduites 41, 42, 43 et 44 aux deux valves 32 et aux deux valves 35.

La position du tiroir du distributeur 36 est commandée pneumatiquement par deux autres entrées d'air comprimé 45 et 46 qui peuvent être reliées sélectivement à une source d'air comprimé et à l'atmosphère respectivement par des distributeurs 47 et 48 qui sont actionnés par une came 49 portée par l'axe 31.

La source de peinture 4 est reliée par la conduite 5 aux entrées des deux valves 33 et 35 associées à la pompe 2, et les sorties des deux valves 32 et 34 associées à la pompe 2 sont reliées par la conduite 7 à l'arrivée de peinture du pistolet 8. Les sorties des deux valves 32 et 34 associées à la pompe 3 sont reliées au détendeur de pression 10, et le réservoir d'eau 23 est relié par la conduite 24 aux entrées des deux valves 33 et 35 associées à la pompe 3.

Le dispositif d'alimentation décrit ci-dessus fonctionne de la manière suivante. Dans la position représentée sur la figure 3, le distributeur 36 envoie de l'air comprimé aux deux valves 33 et aux deux valves 34 qui sont par conséquent ouvertes. La peinture sous pression est donc admise dans le cylindre 27 de la pompe 2 du côté droit du piston 28 de cette pompe qui fonctionne en moteur. Le piston 28 de la pompe 2 déplace de droite à gauche l'axe 31 et le piston 28 de la pompe 3 qui fonctionne en pompe. La peinture précédemment admise dans le cylindre 27 de la pompe 2 du côté gauche du piston 28 est donc refoulée à travers la valve 34 et la conduite 7 vers le pistolet 8. De même, l'eau qui se trouve dans le cylindre 27 de la pompe 3 du côté gauche du piston 28 est refoulée à travers l'autre valve 34 vers le détendeur 10, le débitmètre 12, la valve 14 et l'ajutage calibré 13, pendant que l'eau contenue dans le réservoir 23 est admise par la conduite 24 et par la valve 33 dans le cylindre 27 de la pompe 3 du côté droit du piston 28. Quand les deux pistons 28 arrivent en fin de course à gauche, la came 49 commute momentanément le distributeur 47 sur la source d'air comprimé afin d'envoyer une impulsion d'air comprimé à l'entrée 45 du distributeur 36. Ceci a pour effet de changer la position du tiroir du distributeur 36 qui applique maintenant de l'air comprimé aux deux valves 32 et aux deux valves 35 afin de les ouvrir. En même temps, comme les deux valves 33 et les deux valves 34 ne sont plus alimentées en air comprimé, elles se ferment sous l'action de leurs ressorts de rappel. En conséquence, la peinture sous pression délivrée par la source 4 est maintenant admise à travers la valve 35 du côté gauche du piston 28 dans le cylindre 27 de la pompe 2 fonctionnant en moteur. Les deux pistons 28 et l'axe 31 se déplacent donc maintenant de gauche à droite. La peinture précédemment admise du côté droit du piston 28 dans le cylindre 27 de la pompe 2 est maintenant refoulée à travers la valve 32 et la conduite 7 vers le pistolet 8. De même, l'eau précédemment admise du côté droit du piston 28 dans le cylindre 27 de la pompe 3 est maintenant refoulée à travers l'autre valve 32 vers le détendeur 10. Quand les deux pistons 28 arrivent en fin de course à droite, la came 49 commute momentanément le distributeur 48 sur la source d'air comprimé afin d'envoyer une impulsion d'air comprimé à l'entrée 46 du distributeur 36, ce qui a pour effet de changer à nouveau la position du tiroir du distributeur 36 et de le ramener à sa position de départ. Les valves 33 et 34 sont à nouveau ouvertes et les valves 32 et 35 sont à nouveau fermées et le cycle de fonctionnement recommence comme décrit ci-dessus.

Le réglage du débit d'eau est effectué de la même manière que dans les modes d'exécution représentés sur les figures 1 et 2, au moyen du détendeur de pression 10 et de l'ajutage calibré 13. Si les deux pompes 2 et 3 ont le même volume ou des volumes qui sont dans un rapport fixe, le débit d'eau et le débit de peinture sont égaux ou dans un rapport fixe. En conséquence, si le débit d'eau est bien réglé, le débit de peinture du côté échappement de la pompe 2 fonctionnant en moteur est lui-même réglé à la même valeur que le débit d'eau ou à une valeur qui est dans un rapport fixe avec la valeur du débit d'eau.

Lorsque la pompe 2 fonctionne en moteur comme dans le dispositif d'alimentation en peinture représenté sur la figure 3, on notera qu'il est nécessaire d'utiliser des pompes à piston à double effet et non pas des pompes différentielles, car ces dernières ne donnent pas un débit régulier quand elles fonctionnent en moteur.

On notera aussi que si la source de peinture 4 du dispositif d'alimentation en peinture représenté sur la figure 3 débite de la peinture à une pression relativement basse, les deux pompes à double effet 2 et 3 peuvent fonctionner toutes les deux en pompes si l'axe 31 est relié mécaniquement à un moteur à mouvement alternatif, comme par exemple le moteur pneumatique 1 représenté sur la figure 1.

En outre, on notera aussi que si chacune des deux sources de peinture 4a et 4b du dispositif d'alimentation en peinture représenté sur la figure 2 débite de la peinture à une pression suffisamment élevée, l'ensemble formé par le moteur 1a et par les deux pompes différentielles 2a et 3a peut être remplacé par l'ensemble des deux pompes à double effet 2 et 3 représenté sur la figure 3, de même que l'ensemble formé par le moteur 1b et par les deux pompes différentielles 2b et 3b de la figure 2.

Les modes de réalisation qui ont été décrits ci-dessus permettent d'alimenter un pistolet de pulvérisation soit avec un seul produit (figures 1 et 3), soit sélectivement avec deux produits différents (figure 2).

Toutefois, il existe des peintures constituées par deux composants réagissant l'un sur l'autre pour donner naissance par copolymérisation au film de peinture recherché. Cette réaction des deux composants l'un sur l'autre interdit ou rend difficile leur mélange préalable. Le problème est donc d'avoir un dispositif d'alimentation capable d'assurer un mélange continu des deux composants, au fur et à mesure des besoins, dans un rapport constant et avec un débit global de la peinture devant être fournie au pistolet de pulvérisation 8, et elle refoule ce premier composant vers une soupape commandée 6a à travers une conduite 7a.

La pompe 3a aspire un fluide à viscosité constante, par exemple de l'eau, dans un réservoir 23 à travers un collecteur d'admission 24 commun aux trois ensembles A, B et C, et elle refoule l'eau dans un circuit 9a raccordé au réservoir 23 par un collecteur de retour 9 commun aux trois ensembles A, B et C.

Dans le circuit d'eau 9a sont disposés, en série dans le sens de l'écoulement de l'eau, un détendeur piloté par air comprimé 10a, une valve commandée 11a, un ajutage de réglage 13a et un indicateur de débit 12a. Afin d'avoir une pression d'eau qui ne varie pas trop à l'entrée du détendeur piloté 10a et d'avoir par conséquent une pression d'eau constante à la sortie du détendeur piloté 10a, un détendeur primaire 55a est de préférence intercalé entre le côté refoulement de la pompe 3a et le détendeur piloté 10a. Ce dernier permet de régler la pression d'eau à une valeur constante qui dépend de la valeur de la pression d'air comprimé de pilotage qui est appliquée au détendeur piloté 10a. Dans ces conditions, le débit d'eau à travers l'ajutage 13a est constant et peut être réglé en faisant varier le diamètre de cet ajutage. Comme les deux pompes 2a et 3a sont jumelées et que, par suite, leurs débits sont en permanence égaux ou proportionnels suivant que leurs cylindrées sont égales ou différentes, le débit du produit refoulé par la pompe 2a sera lui aussi constant et pourra être ajusté dans les mêmes proportions que le débit d'eau de la pompe 3a en réglant ce dernier soit au moyen du détendeur piloté 10a soit au moyen de l'ajutage réglable 13a.

Les deux autres ensembles moteurs-pompes B et C et les équipements y associés ont la même structure que l'ensemble moteur-pompe A et les équipements y associés et ne seront donc pas décrits à nouveau en détail. Les éléments des ensembles B et C et des équipements y associés qui correspondent à ceux de l'ensemble A sont désignés par les mêmes numéros de référence affectés de l'indice b ou c selon qu'il s'agit de constant. En outre, le rapport des deux composants du mélange doit pouvoir être réglé selon le type de peinture utilisé d'après les indications fournies par le fabricant de peinture. Le débit global doit aussi pouvoir être réglé pour assurer une alimentation correcte et un bon fonctionnement du pistolet de pulvérisation. Il est aussi parfois nécessaire de diluer la peinture dans un diluant ou solvant, le taux de dilution devant être constant en fonctionnement mais réglable selon le type de peinture et les conditions d'utilisation. Enfin, il est souhaitable de pouvoir utiliser le solvant pour rincer au moins une partie des circuits d'alimentation parcourus par la peinture.

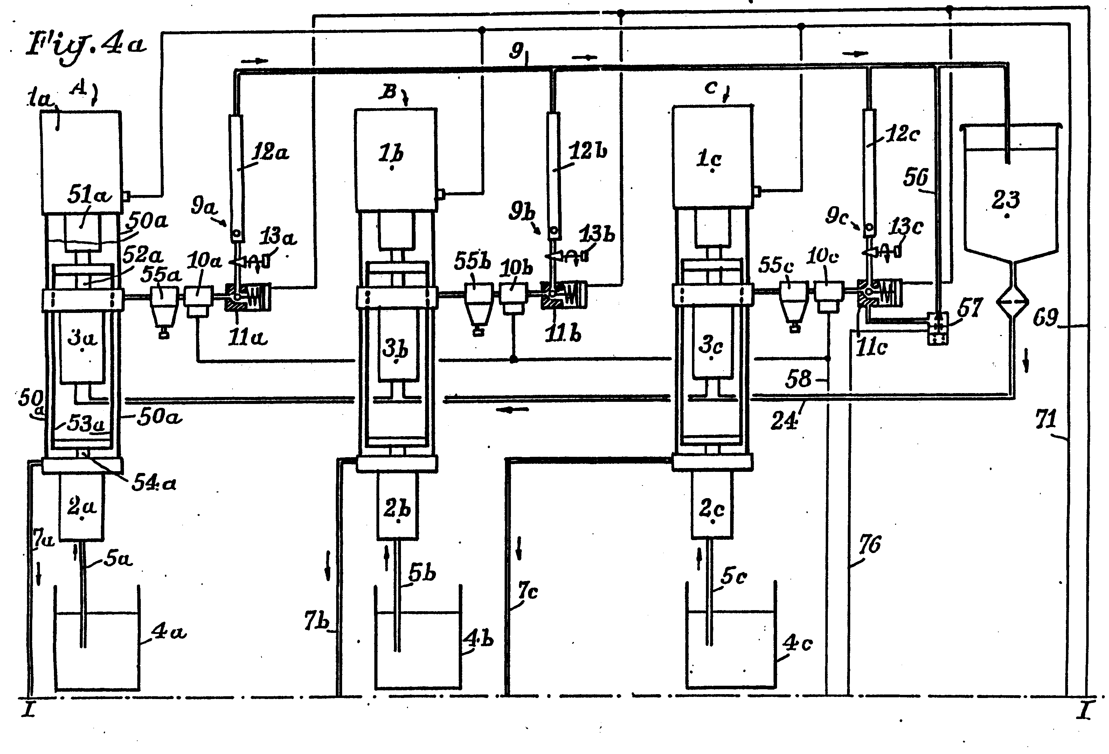

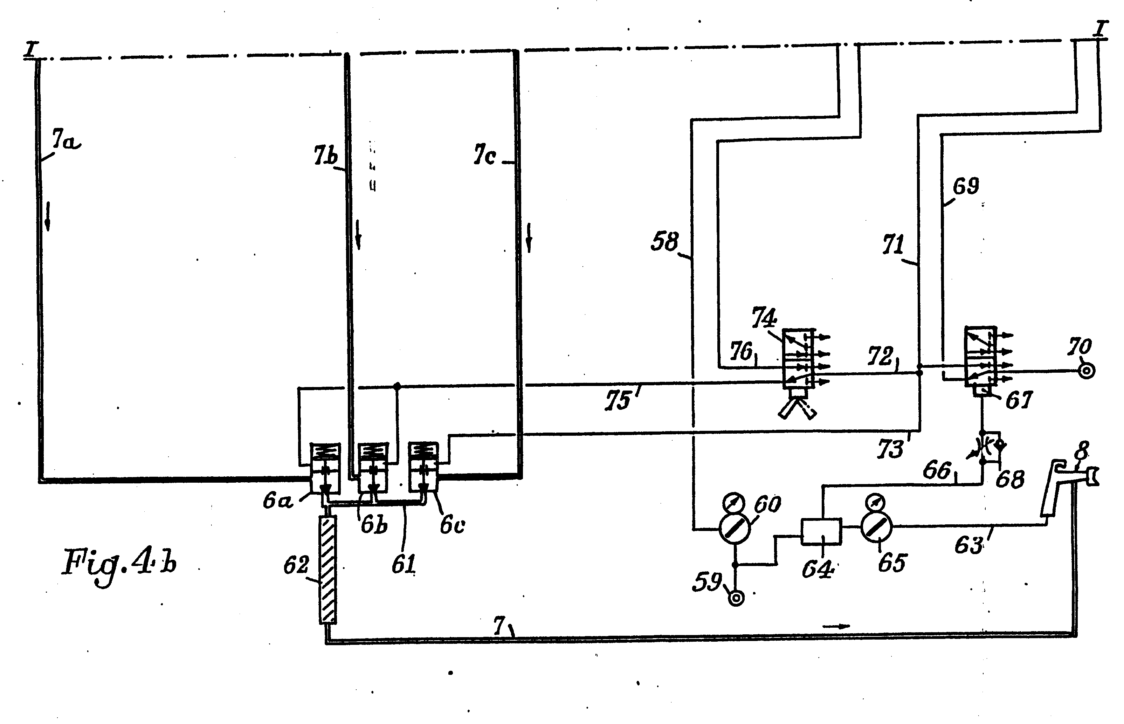

La présente invention permet aussi de résoudre ce problème et on décrira maintenant un dispositif d'alimentation conçu à cette fin, en faisant référence aux figures 4a et 4b. Dans ces figures, les éléments qui sont identiques ou qui ont la même fonction que ceux qui ont été précédemment décrits, sont désignés par les mêmes numéros de référence.

Le dispositif d'alimentation à débit constant représenté sur les figures 4a et 4b comprend trois ensembles moteurs-pompes A, B et C.

L'ensemble A comprend un moteur à mouvement alternatif 1a, par exemple un moteur pneumatique, qui entraîne en synchronisme les pistons de deux pompes volumétriques jumelées 2a et 3a, par exemple des pompes différentielles.

De préférence, le moteur pneumatique 1a, la pompe 2a et la pompe 3a sont disposés coaxialement, l'ensemble de ces trois éléments étant maintenu par des tirants 50a. La tige de piston 51a du moteur pneumatique 1a est couplée directement à la tige de piston 52a de la pompe 3a et, par l'intermédiaire des tirants 53a, à la tige de piston 54a de la pompe 2a. Une telle disposition coaxiale est particulièrement avantageuse car tous les efforts s'exercent suivant l'axe de l'ensemble et, par conséquent, l'ensemble est bien équilibré quels que soient les efforts résistants absorbés par la pompe 2a ou 3a.

La pompe 2a aspire dans un réservoir 4a, à travers une conduite 5a, un premier composant, par exemple un colorant, l'ensemble B ou C. On notera simplement que la pompe 2b débite un deuxième composant de la peinture, par exemple un durcisseur, tandis que la pompe 2c débite un troisième composant, par exemple un diluant. En outre, au moins une partie des moyens de réglage du débit de l'eau circulant dans le circuit 9c peuvent être court-circuités pour obtenir, lorsqu'on le désire, un plus grand débit d'eau et, par conséquent un plus grand débit de diluant, par exemple pour le rinçage d'une partie des circuits parcourus par la peinture. A cet effet, un by-pass 56 muni d'une valve commandée 57 est branché en parallèle sur le circuit comprenant la valve commandée 11c, l'ajutage réglable 13c et l'indicateur de débit d'eau 12c.

Les trois détendeurs pilotés 10a, 10b et 10c sont raccordés par une conduite 58 à une même source d'air comprimé de pilotage 59 à travers un détendeur réglable d'air comprimé 60.

Les valves commandées 6a, 6b, 6c, 11a, 11b, 11c et 57 sont de préférence des valves à commande pneumatique. Les valves 6a, 6b, 6c et 57 sont par exemple des valves normalement fermées, tandis que les valves 11a, 11b et 11c sont par exemple des valves normalement ouvertes. Les moteurs 1a, 1b et 1c et les valves commandées susmentionnées peuvent être alimentés en air comprimé par un dispositif de commande qui sera décrit plus loin.

Les sorties des valves commandées 6a, 6b et 6c sont raccordées au collecteur d'entrée 61 d'un mélangeur 62 qui peut être statique ou dynamique suivant les besoins. La sortie du mélangeur 62 est reliée par la conduite 7 à l'entrée de peinture du pistolet de pulvérisation 8. Ce dernier est alimenté en air comprimé par la conduite 63 sur le trajet de laquelle, à partir de la source d'air comprimé 59, sont montés un distributeur 64 et un détendeur réglable d'air comprimé 65. Le distributeur 64 est agencé pour mettre la conduite 66 sous pression quand le pistolet 8 débite et pour la mettre à l'échappement quand le pistolet ne débite pas. Lorsque la canalisation 66 est sous pression, elle actionne un distributeur 67 par l'intermédiaire d'un temporisateur 68. Ce dernier permet une action directe et immédiate quand la canalisation 66 est mise sous pression, c'est-à-dire quand le pistolet 8 commence à débiter. Par contre, quand le pistolet 8 s'arrête de débiter, la décompression de la commande du distributeur 67 est retardée. Ceci permet de retarder l'arrêt des moteurs pneumatiques 1a, 1b et 1c et, par conséquent, de retarder la mise hors pression du circuit de peinture lorsque le pistolet 8 est arrêté un court instant entre deux applications de peinture.

Au repos, quand le pistolet 8 est à l'arrêt et que la canalisation 66 est hors pression, le distributeur 67 est dans la position représentée sur la figure 4b. Dans ces conditions, la conduite 69 est mise en communication avec la source d'air comprimé 70 et les valves commandées normalement ouvertes 11a, 11b et 11c sont alimentées en air comprimé, donc fermées. Au contraire, les conduites 71, 72 et 73 sont mises à l'échappement, de sorte que les moteurs pneumatiques 1a, 1b et 1c ne fonctionnent pas et que la soupape commandée normalement fermée 6c reste fermée. Un distributeur à deux positions 74 permet, dans une première position (celle représentée sur la figure 4b), de mettre la conduite 72 en communication avec la conduite 75 et la conduite 76 à l'échappement et, dans la seconde position, de mettre la conduite 72 en communication avec la conduite 76 et la conduite 75 à l'échappement. Dans la première position du distributeur 74 et dans les conditions initiales susmentionnées, les valves commandées normalement fermées 6a, 6b et 57 ne sont donc pas alimentées en air comprimé et restent donc fermées. Quand on appuie sur la gachette du pistolet 8 et que ce dernier commence à débiter de l'air comprimé, le distributeur 64 met la conduite 66 sous pression. En conséquence, le distributeur 67 bascule, mettant ainsi la conduite 69 à l'échappement et les conduites 71, 72, 73 et 75 en communication avec la source d'air comprimé 70. Il en résulte que les valves commandées normalement ouvertes 11a, 11b et 11c sont mises à l'échappement et s'ouvrent, tandis que l'air comprimé est envoyé aux moteurs pneumatiques 1a, 1b et 1c qui se mettent à fonctionner et aux valves commandées normalement fermées 6a, 6b et 6c qui s'ouvrent. Les six pompes se mettent en route et refoulent eau et produits dans les circuits correspondants.

Les débits respectifs des trois composants de la peinture qui sont refoulés dans les circuits 7a, 7b et 7c respectivement par les pompes 2a, 2b et 2c peuvent être réglés indépendamment les uns des autres en réglant les débits d'eau dans les circuits 9a, 9b et 9c respectivement au moyen des ajutages réglables 13a, 13b et 13c. Il est ainsi possible de régler les proportions de colorant et de durcisseur envoyés au mélangeur 62 selon les indications fournies par le fabricant de la peinture. En outre, il est aussi possible de régler la dilution et, par suite, la viscosité du mélange envoyé au pistolet de pulvérisation 8 en réglant au moyen de l'ajutage réglable 13c le débit du diluant envoyé au mélangeur 62. Enfin, il est aussi possible de régler le débit global du mélange envoyé au pistolet 8 tout en conservant les proportions des trois composants du mélange qui ont été réglées respectivement au moyen des ajutages réglables 13a, 13b et 13c, en réglant la valeur de la pression d'eau simultanément dans les trois circuits d'eau 9a, 9b et 9c au moyen des trois détendeurs pilotés 10a, 10b et 10c. Ceci peut être obtenu en réglant au moyen du détendeur 60 la valeur de la pression de l'air comprimé envoyé aux trois détendeurs pilotés 10a, 10b et 10c.

En fin de travail, il faut purger et rincer les parties du circuit contenant le mélange des trois composants. Le distributeur 74 et la valve commandée 57 permettent de réaliser cette opération. Dans la figure 4b, le distributeur 74 est représenté en position de travail. Dans ce cas, la valve commandée normalement fermée 57 est mise à l'échappement, donc fermée, tandis que les valves commandées 6a, 6b sont mises en communication avec la conduite 72 de façon à être commandée par le distributeur 67 pour le fonctionnement normal du pistolet de pulvérisation 8, c'est-à-dire pour un cycle de peinture selon ce qui a été décrit plus haut. Pour un cycle de rinçage, on bascule le levier de manoeuvre du distributeur 74 dans la position représentée en pointillé sur le dessin. Dans ce cas, les soupapes commandées normalement fermées 6a, 6b sont mises à l'échappement, donc fermées, tandis que la conduite 76 est mise en communication avec la conduite 72 et la valve commandée normalement fermée 57 est alimentée en air comprimé par l'intermédiaire du distributeur 67 et des deux conduites 72 et 76 quand on actionne la gachette du pistolet 8. Dans ce cas, les moteurs pneumatiques 1a, 1b et 1c sont mis sous pression, mais seule la pompe 2c peut débiter du solvant car seule la valve commandée 6c s'ouvre, les autres valves commandées 6a et 6b restant fermées. En outre, la valve commandée 57 s'ouvre et l'ajutage réglable 13c et l'indicateur de débit 12c sont court-circuités par le by-pass 56. Ceci permet d'obtenir un grand débit d'eau et, par suite, un grand débit de solvant qui rince le collecteur 61, le mélangeur 62, la conduite 7 et le pistolet 8.

Dans ce qui précède, on a supposé que les trois valves commandées 11a, 11b et 11c étaient constituées par des valves normalement ouvertes. Cependant, ces trois valves peuvent aussi être constituées par des valves normalement fermées. Dans ce cas, ces trois valves doivent être raccordées à la conduite 71, la conduite 69 étant supprimée.

Bien qu'il soit prévu normalement trois ensembles moteurs-pompes A, B et C dans le dispositif d'alimentation représenté sur les figures 4a et 4b, on peut prévoir un ou plusieurs autres ensembles moteurs-pompes additionnels pour d'autres composants, par exemple pour d'autres colorants, et n'utiliser que l'ensemble moteur-pompe correspondant au colorant désiré.

Il est aussi possible d'alimenter deux pistolets de pulvérisation ou plus. Pour cela, il faut prévoir, pour chacun des trois ensembles moteurs-pompes A, B et C, autant d'équipements de régulation de débit d'eau, c'est-à-dire autant de valves commandées 11 et d'ajutages réglables 13 que de pistolets. En outre, sur le circuit d'alimentation en air comprimé de chaque pistolet, il faut prévoir un distributeur analogue au distributeur 64 pour commander le fonctionnement de distributeurs d'air comprimé semblables au distributeur 67. Ce système nécessite en outre l'équilibrage des circuits d'alimentation des pistolets en produit, pour égaliser la répartition du débit des pompes entre les pistolets.

Dans ce qui précède, on a supposé que les pompes 2<u>a</u>, 2<u>b</u> et 2<u>c</u> aspiraient les deux composants de la peinture et le solvant respectivement à partir des réservoirs 4<u>a</u>, 4<u>b</u> et 4<u>c</u>. Toutefois, si les deux composants de la peinture et le solvant sont délivrés sous pression aux trois pompes 2<u>a</u>, 2<u>b</u> et 2<u>c</u>, ces trois pompes peuvent être utilisées comme moteur pour entraîner respectivement les trois pompes à eau 3<u>a</u>, 3<u>b</u> et 3<u>c</u> et les moteurs pneumatiques 1<u>a</u>, 1<u>b</u> et 1<u>c</u> peuvent être supprimés. Dans ce cas, on utilise des pompes à clapets commandés pour les trois pompes 2<u>a</u>, 2<u>b</u> et 2<u>c</u> suivant une disposition analogue à celle représentée sur la figure 3.

Enfin, bien que la présente invention ait été décrite dans son application à une installation de pulvérisation de peinture, il est bien évident qu'elle est également applicable dans tous les cas où il est nécessaire d'alimenter à un débit constant et réglé un appareil utilisateur avec au moins un fluide ayant une viscosité variable.

Il est du reste bien entendu que les formes d'exécution de la présente invention qui ont été décrites ci-dessus ont été données à titre d'exemples purement indicatifs et nullement limitatifs, et que de nombreuses modifications peuvent être apportées sans pour autant sortir du cadre de la présente invention.

- REVENDICATIONS DE BREVET -

1. Dispositif permettant d'alimenter à débit constant un appareil utilisateur, par exemple un pistolet de pulvérisation, avec au moins un fluide ayant une viscosité variable, par exemple de la peinture, comprenant une source de fluide délivrant ledit fluide à viscosité variable et un circuit de fluide reliant ladite source de fluide à l'appareil utilisateur, caractérisé en ce qu'il comprend en outre deux pompes volumétriques (2 et 3) jumelées mécaniquement pour que leurs débits soient dans un rapport fixe, une première (2) des deux pompes étant intercalée dans le circuit (5, 7) du fluide à viscosité variable, tandis que la seconde pompe (3) est intercalée dans un second circuit de fluide (9, 24), dans lequel circule un fluide à viscosité constante et qui comporte, en aval de la seconde pompe (3), des moyens (10, 13) de réglage du débit du fluide à viscosité constante.

2. Dispositif selon la revendication 1, caractérisé en ce que les moyens de réglage de débit comprennent un détendeur de pression réglable (10) relié au côté refoulement de la seconde pompe (3) et un premier ajutage calibré (13) de diamètre réglable en série avec le détendeur de pression (10).

3. Dispositif selon la revendication 2, caractérisé en ce qu'il comprend en outre un débitmètre (12) intercalé dans le second circuit de fluide (9) entre le détendeur de pression (10) et le premier ajutage calibré (13), une première valve commandée (6) intercalée dans le premier circuit de fluide (7) du côté refoulement de la première pompe (2), une deuxième valve commandée (11) intercalée dans le second circuit de fluide (9) entre le détendeur de pression (10) et le débitmètre (12), une troisième valve commandée (14) associée au premier ajutage calibré (13), et un dispositif (19-22) pour commander les trois valves.

4. Dispositif selon la revendication 3, caractérisé en ce qu'il comprend en outre un second ajutage calibré de diamètre réglable, associé à la deuxième valve commandée 11.

5. Dispositif selon la revendication 3 ou 4, caractérisé en ce qu'il comprend un troisième ajutage calibré de diamètre réglable, associé à la première valve commandée 6.

6. Dispositif selon l'une quelconque des revendications 1 à 5, caractérisé en ce que les deux pompes 2 et 3 sont des pompes différentielles actionnées en synchronisme par un unique moteur (1) à mouvement alternatif.

7. Dispositif selon la revendication 6, caractérisé en ce que le moteur (1) à mouvement alternatif est un moteur pneumatique.

8. Dispositif selon l'une quelconque des revendications 1 à 7, comprenant un robinet à trois voies (25) ayant une première entrée reliée au premier circuit de fluide (7a) et une sortie reliée à l'appareil utilisateur (8), une seconde source de fluide (4b) délivrant un autre fluide à viscosité variable, et un troisième circuit de fluide (7b) reliant ladite seconde source de fluide (4b) à une seconde entrée du robinet à trois voies (25), caractérisé en ce qu'il comprend en outre des troisième et quatrième pompes volumétriques (2b et 3b) jumelées pour que leurs débits soient dans un rapport fixe, la troisième pompe (2b) étant intercalée dans le troisième circuit de fluide (7b), tandis que la quatrième pompe (3b) est intercalée dans un quatrième circuit de fluide (9b) dans lequel circule un fluide à viscosité constante et qui comporte, en aval de la quatrième pompe (3b), des moyens (10b, 13) de réglage du débit du fluide à viscosité constante.

9. Dispositif selon la revendication 8, caractérisé en ce que les second et quatrième circuits de fluide (9a et 9b) ont une partie commune et en ce que les moyens (10a, 13) de réglage de débit associés au second circuit de fluide (9a) et ceux (10b, 13) associés au quatrième circuit de fluide (9b) ont une partie commune (13) disposée dans la partie commune des second et quatrième circuits de fluide (9a et 9b).

10. Dispositif selon l'une quelconque des revendications 1 à 5, caractérisé en ce que les deux pompes (2 et 3) sont des pompes à double effet.

11. Dispositif selon la revendication 10, caractérisé en ce que l'un des deux fluides est délivré sous haute pression à l'une (2) des deux pompes à double effet (2 et 3), et en ce qu'au moins celle (2) des deux pompes à double effet qui reçoit le fluide sous haute pression a des valves commandées (32-35) et est utilisée comme moteur pour entraîner
l'autre pompe à double effet (3).

12. Dispositif d'alimentation selon la revendication 1, caractérisé en ce qu'il comprend un mélangeur (62)
ayant une sortie reliée à l'appareil utilisateur (8), une
première entrée reliée au premier circuit de fluide à viscosité variable (5a, 7a) et une seconde entrée pour un second
fluide à viscosité variable, une seconde source de fluide (4b)
délivrant le second fluide à viscosité variable, un troisième
circuit de fluide (5b, 7b) reliant la seconde source de
fluide (4b) à la seconde entrée du mélangeur (62), un quatrième circuit de fluide (9b) dans lequel circule un fluide à
viscosité  constante, des troisième et quatrième pompes
volumétriques (2b et 3b) qui sont jumelées mécaniquement pour
que leurs débits soient dans un rapport fixe et qui sont
intercalées respectivement dans les troisième et quatrième
circuits de fluide (5b, 7b et 9b), des seconds moyens (10b,
13b). de réglage de débit disposés dans le quatrième circuit
de fluide (9b) en aval de la quatrième pompe (3b) et des
premier et second indicateurs de débit (12a et 12b) disposés
respectivement dans les second et quatrième circuits de
fluide (9a et 9b).

13. Dispositif selon la revendication 12, caractérisé en ce qu'il comprend en outre une troisième source de
fluide (4c) délivrant un diluant, un cinquième circuit de
fluide (5c, 7c) reliant la troisième source (4c)
à une troisième entrée du mélangeur (62), un
sixième circuit de fluide (9c) dans lequel circule un
fluide à viscosité constante, des cinquième et sixième
pompes volumétriques (2c et 3c) qui sont jumelées mécaniquement pour que leurs débits soient dans un rapport fixe
et qui sont intercalées respectivement dans les cinquième et
sixième circuits de fluide (5c, 7c et 9c), des troisièmes
moyens (10c, 13c) de réglage de débit disposés dans le
sixième circuit de fluide (9c) en aval de la sixième pompe (3c),
et un troisième indicateur de débit (12c) disposé dans le
sixième circuit de fluide (9c).

4

14. Dispositif d'alimentation selon la revendication 12 ou 13, caractérisé en ce que chacun desdits moyens de réglage de débit comprend un détendeur (10a,b,c) piloté par air comprimé et un ajutage de réglage (13a,b,c) disposé en aval du détendeur piloté (10a,b,c).

15. Dispositif d'alimentation selon la revendication 14, caractérisé en ce que les détendeurs pilotés (10a,b,c) sont raccordés à une même source d'air comprimé de pilotage (59) à travers un unique détendeur réglable d'air comprimé (60).

16. Dispositif d'alimentation selon la revendication 14 ou 15, caractérisé en ce qu'un détendeur primaire (55a,b,c) est intercalé dans chacun des circuits de fluide (9a,b,c) parcourus par le fluide à viscosité constante entre le côté refoulement de la pompe correspondante (3a,b,c) et le détendeur piloté (10a,b,c).

17. Dispositif d'alimentation selon l'une quelconque des revendications 13 à 16, caractérisé en ce que les circuits de fluides (9a,b,c) parcourus par le fluide à viscosité constante ont une partie commune comprenant un réservoir de fluide à viscosité constante (23) un collecteur d'admission (24) raccordé aux pompes (3a,b,c) faisant circuler le fluide à viscosité constante et un collecteur (9) de retour au réservoir (23).

18. Dispositif selon l'une quelconque des revendications 13 à 17, caractérisé en ce qu'il comprend des première, troisième et cinquième valves commandées (6a,b,c) intercalées respectivement dans les premier, troisième et cinquième circuits de fluide (7a,b,c) entre le côté refoulement des première, troisième et cinquième pompes (2a,b,c) et les première, deuxième et troisième entrées du mélangeur (62), des deuxième, quatrième et sixième valves commandées (11a,b,c) intercalées respectivement dans les deuxième, quatrième et sixième circuits de fluide (9a,b,c) du côté refoulement des deuxième, quatrième et sixième pompes (3a,b,c), et un dispositif de commande (64, 67, 70) relié auxdites valves commandées pour provoquer leur ouverture en réponse à la mise en action de l'appareil utilisateur (8).

19. Dispositif selon la revendication 18, caractérisé en ce qu'il comprend un by-pass (56) branché en parallèle sur au moins une partie des troisièmes moyens (10c, 13c) de réglage de débit, une septième valve commandée (57) intercalée dans le by-pass (56), et un dispositif commutateur (74) à deux positions monté entre le dispositif de commande (64, 67, 70) et les première, troisième et septième valves commandées (6a, 6b et 57) pour provoquer, dans une première position, l'ouverture des première et troisième valves (6a,b) et la fermeture de la septième valve (57) et, dans la seconde position, l'ouverture de la septième valve (57) et la fermeture des première et troisième valves (6a,b).

20. Dispositif selon la revendication 18 ou 19, caractérisé en ce que lesdites valves commandées (6a,b,c, 11a,b,c et 57) sont des valves à commande pneumatique, et en ce que chaque paire de pompes jumelées mécaniquement (2,3) est entraînée par un moteur pneumatique (1) à mouvement alternatif.

Fig.1

Fig.2

2/5

0007252

Fig.3

*Fig. 4a*

Fig.4·b

**Office européen des brevets**

## RAPPORT DE RECHERCHE EUROPEENNE

Numéro de la demande
EP 79 40 0250

| DOCUMENTS CONSIDERES COMME PERTINENTS | | | CLASSEMENT DE LA DEMANDE (Int. Cl.²) |
|---|---|---|---|
| **Catégorie** | **Citation du document avec indication, en cas de besoin, des parties pertinentes** | **Revendication concernée** | |
| A | US - A - 3 958 724 (R.S. ORDWAY)<br>* Totalité du brevet *<br>-- | 1 | B 05 B 9/00<br>B 05 B 7/32<br>G 05 D 7/03<br>F 04 B 13/02 |
| A | FR - A - 2 326 986 (CHAMPION SPARK PLUG COMP.)<br>* Totalité du brevet *<br>-- | 1 | |
| A | FR - A - 2 045 393 (ATLAS COPCO AKT.)<br>* Totalité du brevet *<br>-- | 1 | **DOMAINES TECHNIQUES RECHERCHES (Int. Cl.²)** |
| A | FR - A - 1 148 872 (ATLAS COPCO AKT.)<br>* Totalité du brevet *<br>-- | 1 | B 05 B<br>G 05 D<br>F 04 B |
| A | GB - A - 948 332 (RICHARD SUTCLIFFE LTD.)<br>* Totalité du brevet *<br>---- | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 06-07-1979 | COLPAERT |

OEB Form 1503.1 06.78